# FASCICULE DE BREVET EUROPEEN

(11) **EP 1 914 095 B1**
(45) Date de publication et mention de la délivrance du brevet: **01.07.2009**
(21) Numéro de dépôt: 07118607.6
(22) Date de dépôt: 16.10.2007
(51) Int. Cl.: B60J 1/20, B60R 5/04

(54) **Dispositif d'occultation à biellettes avec élément d'occultation latéral, biellette et véhicule automobile correspondants.**
Abdeckungsvorrichtung mit Schwingarm und seitlichem Abdeckungselement sowie entsprechender Schwingarm und entsprechendes Kraftfahrzeug
Concealing device with tie rods with lateral concealing element, corresponding automobile and tie rod.

(30) Priorité: 18.10.2006 FR 0609141
(43) Date de publication de la demande: 23.04.2008
(73) Titulaire: Wagon SAS, 79302 Bressuire Cédex (FR)
(72) Inventeur: Fourel, Pascal, 35400, SAINT MALO (FR); Jolivet, David, 79300, BRESSUIRE (FR); Bochard, Arnaud, 79300, BRESSUIRE (FR)
(74) Mandataire: Bioret, Ludovic

(56) Documents cités:
- DE-A1- 19 531 587
- DE-A1-1102004 012 18

## Description

### 1. Domaine de l'invention

Le domaine de l'invention est celui des stores d'occultation de véhicule automobile, et des véhicules particuliers (camionnette, camion, autobus...).

Plus précisément, l'invention concerne les stores rétractables à enrouleur, que l'utilisateur peut déployer, par exemple pour se protéger du soleil.

### 2. Art antérieur

On équipe depuis longtemps les véhicules automobiles de stores à enrouleur, pour permettre l'occultation d'une lunette arrière, d'une vitre latérale ou d'une vitre de custode, afin de protéger en cas de besoin les occupants du véhicule de la chaleur ou de la lumière. Plus généralement, des stores à enrouleur peuvent être mis en oeuvre en regard de toute surface vitrée, ainsi que pour dissimuler un espace, par exemple sous la forme d'un cache-bagage.

De tels stores comprennent classiquement une cassette logeant un tube enrouleur auquel est liée une extrémité d'une toile d'occultation mobile entre une position repliée dans laquelle elle est enroulée autour du tube enrouleur, et au moins une position déployée dans laquelle elle occulte au moins partiellement une surface à occulter. L'extrémité libre de la toile d'occultation est solidaire d'une barre de tirage permettant son déploiement.

Ces stores peuvent être actionnés manuellement. Dans ce cas, un utilisateur agit sur la barre de tirage de façon à déployer la toile. Des moyens d'accrochage de cette barre de tirage permettent de retenir la toile dans sa position déployée, dans laquelle elle occulte la surface à occulter. Des moyens de rappel agissent sur le tube enrouleur et tendent à ramener la toile dans la position repliée.

Ces stores peuvent également être motorisés. Dans ce cas, les extrémités de la barre de tirage peuvent être guidées en coulissement le long de rails de guidage. La barre de tirage peut également être entraînée au moyen de biellettes par exemple liées à la cassette.

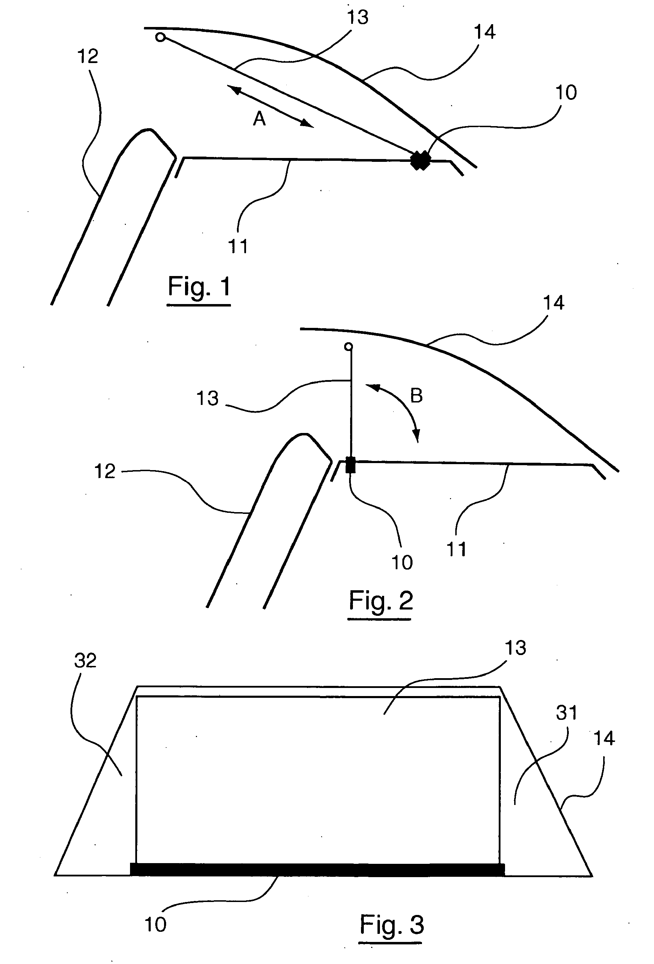

Généralement, tel que cela est représenté sur la figure 1, la cassette 10 est solidarisée à la plage arrière 11 placée à l'arrière d'une banquette arrière 12 d'un véhicule de telle façon que la toile 13 est déployée (flèche A) au plus près de la surface à occulter 14.

On a également développé, pour les véhicules de type berline ou coupé, dont la carrosserie présente une ligne élancée, c'est-à-dire dont la lunette arrière est de forme complexe ou est fortement inclinée vers l'avant, des stores dont la toile 13 se déploie ou pivote (flèche B) de façon à s'étendre sensiblement verticalement derrière la banquette arrière 12.

Cependant, que la toile soit déployée au plus près de la surface à occulter (figure 1) ou bien verticalement derrière la banquette arrière (figure 2), on observe généralement de chaque côté de la toile 13, un espace 31, 32 formé entre la surface à occulter 14 et les bords latéraux de la toile 13, et qui n'est pas occulté par la toile 13 (figure 3).

Un inconvénient de ces techniques de l'art antérieur est qu'elles ne sont pas adaptées au cas où la surface à occulter n'est pas rectangulaire, ce qui est souvent le cas. En effet, ces techniques de l'art antérieur ne permettent pas une obturation optimale de la surface à occulter du fait que les rayons du soleil peuvent passer entre les bords de la surface à occulter et les bords de la toile d'occultation. Cela peut se révéler très gênant pour les occupants d'un véhicule, et réduit fortement l'intérêt du dispositif d'occultation.

Le document DE 10 2004 072 181 A1 décrit un dispositif d'occultation correspondant au préambule de la revendication 1.

### 3. Objectifs de l'invention

L'invention a notamment pour objectif de pallier ces inconvénients de l'art antérieur.

Plus précisément, un objectif de l'invention est de fournir une telle technique qui permette d'occulter une surface de façon optimale y compris lorsqu'elle n'est pas rectangulaire.

Un autre objectif de l'invention est de fournir une telle technique qui soit simple à mettre en oeuvre.

L'invention poursuit également l'objectif de fournir une telle technique qui présente de bonnes qualités tant sur un plan esthétique que sur un plan ergonomique.

Un autre objectif de l'invention est la fourniture d'une telle technique qui soit robuste.

L'invention à encore pour objectif de fournir une telle technique qui soit simple à produire et qui ne soit pas onéreuse.

### 4. Exposé de l'invention

Ces objectifs, ainsi que d'autres qui apparaîtront par la suite, sont atteints à l'aide d'un dispositif d'occultation pour véhicule automobile, comprenant une toile d'occultation montée sur un tube enrouleur de façon à être mobile entre une position repliée et au moins une position déployée, l'extrémité libre de ladite toile d'occultation étant solidaire d'une barre de tirage entraînée par deux biellettes.

Selon l'invention, au moins une desdites biellettes porte un élément d'occultation latéral, destiné à occulter au moins en partie un espace formé entre une surface à occulter et ladite toile d'occultation, dans au moins une desdites positions déployées.

Ainsi, l'invention repose sur une approche tout à fait nouvelle et inventive consistant à munir d'un élément d'occultation supplémentaire les biellettes liées à la barre de tirage et à la cassette d'un store de façon que, lorsque la toile est en position déployée, les éléments d'occultation supplémentaire viennent occulter les portions latérales de la surface à occulter non occultées par la toile d'occultation.

Cette approche permet donc d'obtenir de façon simple et efficace, une occultation quasi totale d'une surface non rectangulaire à occulter et ainsi d'améliorer le confort, voir la sécurité, des occupants d'un véhicule.

Avantageusement, chaque biellette est liée à une cassette contenant ledit tube enrouleur au moyen d'une liaison pivot, et est logée au moins en partie dans ou le long de ladite cassette, dans ladite position repliée.

Cette approche permet, lorsque la toile d'occultation est repliée, de dissimuler au moins en partie les biellettes et ainsi d'obtenir un dispositif discret et esthétique.

Préférentiellement, chacune desdites biellettes est liée à ladite barre de tirage au moyen d'une liaison glissière.

La barre de tirage peut donc rester d'aplomb au cours du déploiement et du repli de la toile d'occultation.

Selon une caractéristique avantageuse de l'invention, chaque extrémité de ladite barre de tirage présente un doigt destiné à coopérer avec une zone de guidage formée dans chacune desdites biellettes.

Cette approche permet de faciliter le guidage de la barre de tirage, et donc le repli et le déploiement de la toile d'occultation.

Selon une autre caractéristique préférée, un moteur logé à l'intérieur dudit tube enrouleur permet le dépliement et le repli de ladite toile d'occultation.

Ceci permet notamment de motoriser le déploiement et le repli de la toile d'occultation dans un encombrement limité.

Préférentiellement, des moyens de rappels agissent sur lesdites biellettes de façon à maintenir ladite toile d'occultation tendue.

Cette approche permet notamment d'éviter que la toile ne plisse, notamment au cours du déploiement et du repli. Ceci permet également de faciliter le repli et le déploiement de la toile.

Avantageusement, lesdits moyens de rappel sont des ressorts spirals.

De tels ressorts sont notamment peu encombrants et présentent l'avantage d'être simples à mettre en oeuvre.

Selon une caractéristique avantageuse de l'invention, ledit élément d'occultation latéral est constitué d'une toile tendue sur chacune desdites biellettes.

Cette approche permet d'obtenir facilement des éléments d'occultation latéraux particulièrement efficaces et peu coûteux.

Préférentiellement, un enjoliveur est rapporté sur chacune desdites biellettes.

Ceci confère au dispositif selon l'invention de bonnes qualités esthétiques. Cette approche peut également permettre de solidariser efficacement et facilement les éléments d'occultation latéraux aux biellettes.

Selon une caractéristique avantageuse de l'invention, dans la ou lesdites positions déployées, le dispositif s'étend sensiblement verticalement dans ledit véhicule.

Cette approche permet d'adapter le dispositif d'occultation selon l'invention à un grand nombre de types de véhicule, tout en assurant une occultation optimale d'une surface à occulter, notamment lorsqu'elle n'est pas rectangulaire.

Selon une autre caractéristique avantageuse, le dispositif selon l'invention porte ou est associé à au moins une seconde toile d'occultation, destinée à former un store de cache-bagages.

Ceci permet notamment de pouvoir réunir un store d'occultation et un store de cache-bagages dans un espace sensiblement réduit.

L'invention porte également sur une biellette pour un dispositif d'occultation selon l'invention, et sur un véhicule automobile équipé d'un tel store.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une technique de l'art antérieur selon laquelle la toile d'occultation d'un store est déployée au plus près de la surface à occulter;
- la figure 2 illustre une autre technique de l'art antérieur dans laquelle la toile d'occultation d'un store est déployée sensiblement verticalement derrière la banquette arrière d'un véhicule ;
- la figure 3 montre une toile d'occultation de stores tels que ceux illustrés à la figure 1 et à la figure 2 dans une position déployée;

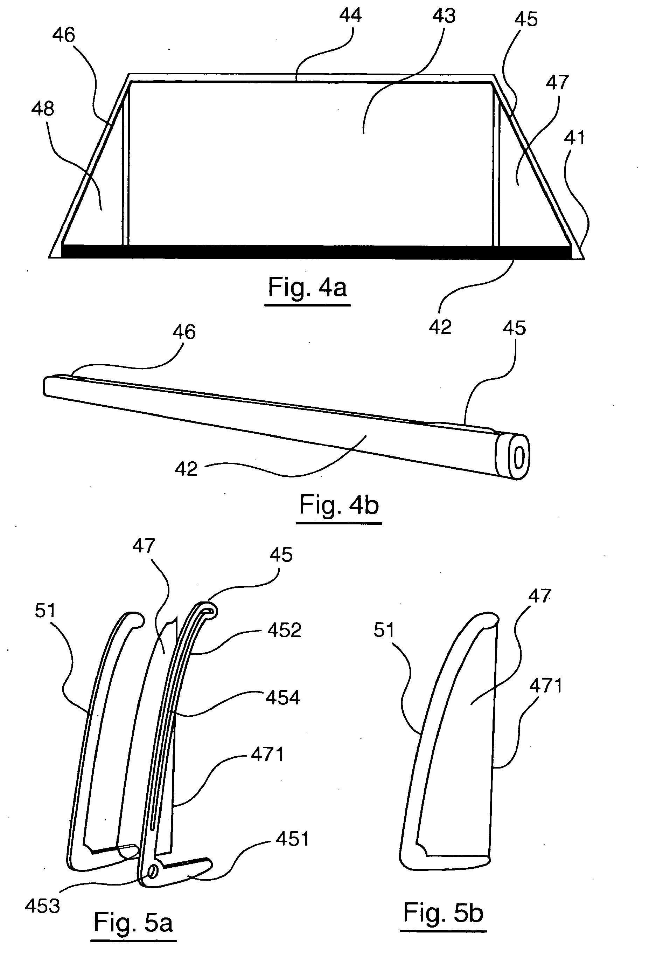

- la figure 4a illustre, en position déployée, un exemple de store selon l'invention dont chacune des biellettes est munie d'un élément d'occultation supplémentaire ;
- la figure 4b illustre, en position repliée, le store représenté sur la figure 4a ;
- la figure 5a illustre une vue en éclaté d'un exemple de biellette selon l'invention ;
- la figure 5b illustre un exemple de biellette selon l'invention ;

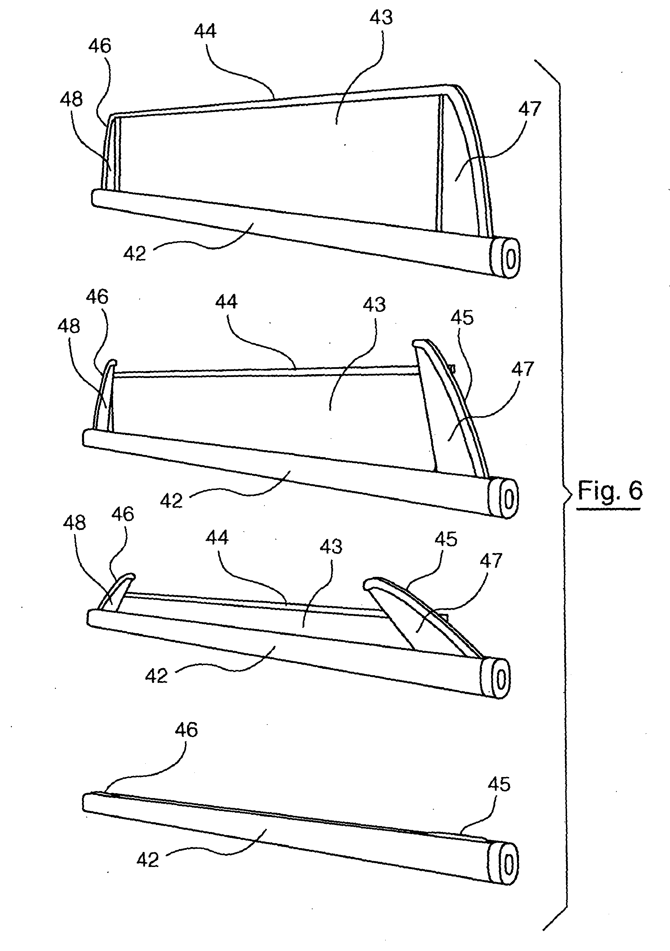

- la figure 6 illustre un exemple de store selon l'invention en position déployée, en deux positions intermédiaires choisies de façon arbitraire, et en position repliée ;

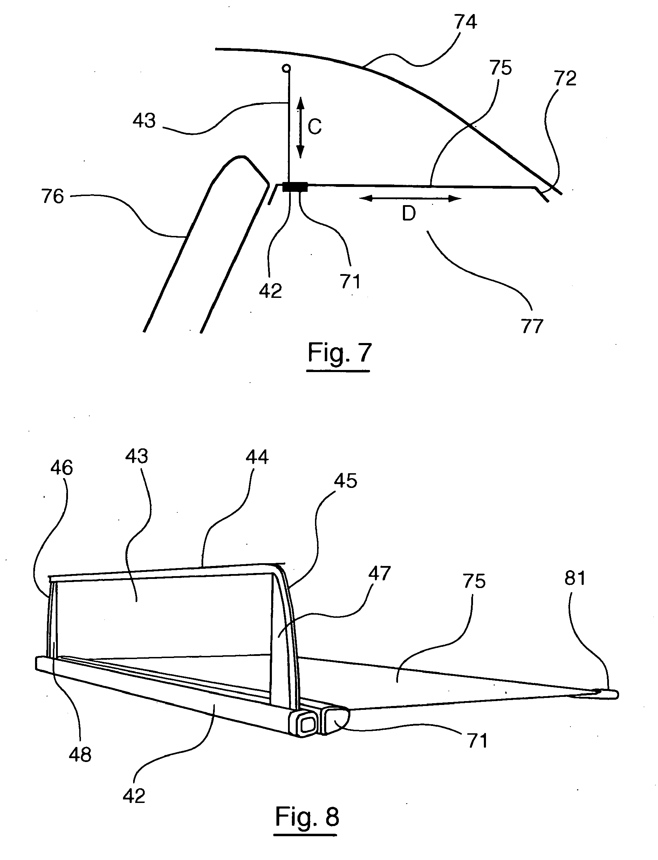

- la figure 7 illustre une variante de l'invention dans laquelle la cassette d'un store d'occultation selon l'invention est associée à une cassette d'un cache-bagages ;
- les figures 8 à 10 illustrent respectivement la variante de l'invention présentée à la figure 7 avec le store d'occultation et le cache-bagages en position déployée, le store en position déployée et le cache-bagages en position repliée, le store et le cache-bagages en position repliée ;

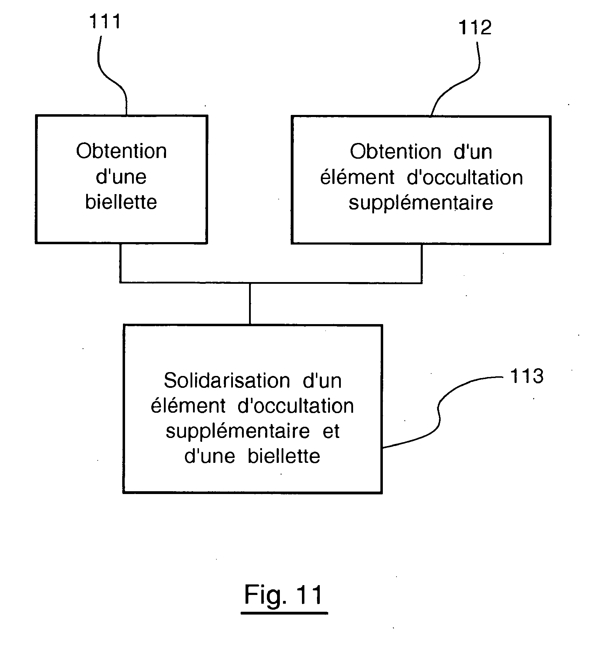

- la figure 11 illustre un procédé d'obtention d'un ensemble composé d'une bielette et d'un élément d'occultation complémentair selon l'invention.

### 6. Description d'un mode de réalisation de l'invention

### 6.1. Principe de l'invention

Le principe général de l'invention repose sur la mise en oeuvre de biellettes, reliées à la barre de tirage et à la cassette d'un store, munies d'un élément d'occultation supplémentaire de façon que, lorsque la toile d'occultation est dans une position déployée, les éléments d'occultation supplémentaire viennent recouvrir les parties latérales d'une surface non rectangulaire à occulter non occultées par la toile d'occultation du store.

Cette approche permet ainsi une occultation optimale des surfaces vitrées non rectangulaires de façon simple et efficace.

On présente, en relation avec les figures 4a et 4b, le principe de l'occultation d'une surface à occulter, par exemple une lunette arrière 41 non rectangulaire, au moyen d'un store selon l'invention. On note que sur la figure 4a, les proportions n'ont pas été conservées de façon à faciliter la compréhension.

Classiquement, le store selon l'invention comprend une cassette 42 logeant un tube enrouleur (non représenté) auquel est reliée une extrémité d'une toile d'occultation 43. La toile d'occultation 43 est mobile entre une position repliée dans laquelle elle est enroulée autour du tube d'enroulement, et au moins une position déployée dans laquelle elle occulte au moins en partie la lunette arrière 41. L'extrémité libre de la toile d'occultation 43 est munie d'une barre de tirage 44. Chaque extrémité de la barre de tirage 44 est liée à la cassette 42 au moyen d'une biellette 45, 46. Un élément d'occultation latéral ou supplémentaire 47, 48 est solidarisé à chacune des biellettes 45, 46.

Tel que cela apparaît sur la figure 4a, lorsque la toile d'occultation 43 est en position d'occultation, les éléments d'occultation supplémentaire 47, 48 occultent les parties latérales de la lunette arrière 41 non occultées par la toile d'occultation 43.

Tel que représenté sur la figure 4b, lorsque la toile d'occultation 43 est en position repliée, les biellettes 45, 46 ainsi que les éléments d'occultation supplémentaire 47, 48 sont dissimulés, ou a tout le moins sensiblement dissimulés, à l'intérieur de la cassette 42.

### 6.2. Biellettes et éléments d'occultation supplémentaires

On présente en relation avec les figures 5a et 5b, un exemple de biellette et d'élément d'occultation supplémentaire selon l'invention.

La biellette 45 est formée d'une portion inférieure 451 et d'une portion supérieure 452 définissant sensiblement un « L ». La zone raccordant les portions inférieure et supérieure 451, 452 est traversée par un trou de perçage 453. La portion supérieure 452 présente une zone de guidage 454 dont la fonction sera explicitée plus loin.

La biellette 45 est préférentiellement réalisée dans un matériau rigide présentant de bonnes caractéristiques mécaniques. Il pourra par exemple s'agir d'acier, ou bien d'un alliage d'aluminium.

L'élément d'occultation supplémentaire 47 présente un profil complémentaire de celui de la biellette 45 ainsi qu'un bord 471 s'étendant sensiblement à la verticale lorsque la biellette 45 est maintenue verticalement. Ce bord 471 est destiné à venir en regard d'un bord latéral de la toile d'occultation 43 de façon à garantir une bonne occultation en limitant au maximum le passage de rayons de soleil.

L'élément d'occultation supplémentaire 47 est réalisé dans un matériau présentant une certaine opacité. Il pourra avantageusement être réalisé au moyen d'un matériau similaire à ceux qui sont mis classiquement en oeuvre pour la réalisation des toiles d'occultation des stores et/ou présenter le(s) mêmes motifs et/ou couleur(s) que la toile d'occultation 43.

Un cache 51, encore appelé enjoliveur, est rapporté sur la biellette 45 de façon à la recouvrir et à dissimuler la zone de guidage 454. L'enjoliveur 51 assure en outre une meilleure intégration du store dans l'habitacle d'un véhicule. Cet enjoliveur 51 est préférentiellement réalisé dans un matériau plastique. D'autres matériaux adaptés peuvent néanmoins être mis en oeuvre.

L'enjoliveur 51 peut être maintenu sur la biellette 45 par exemple par clippage, par collage ou part toute autre technique de solidarisation adaptée.

L'enjoliveur 51 peut permettre de maintenir l'élément d'occultation supplémentaire 47 sur la biellette 45. Dans une variante de l'invention, l'élément d'occultation supplémentaire 47 peut être collé, soudé ou sertit sur la biellette 45. D'autres modes de fixation peuvent être envisagés.

Dans une autre variante de l'invention, l'élément d'occultation supplémentaire 47 et la biellette 45 peuvent ne former qu'une seule pièce réalisée, par exemple, dans un matériau plastique adapté. Cette approche permet notamment de diminuer le nombre de pièces à mettre en oeuvre.

La figure 5b illustre une biellette 45 selon l'invention sur laquelle à été rapporté un élément d'occultation supplémentaire 47 et un enjoliveur 51.

Seuls la biellette 45 et l'élément d'occultation supplémentaire 47 ont été décrits en relation avec les figures 5a et 5b. Bien entendu, la biellette 46 et l'élément d'occultation supplémentaire 48 présentent des caractéristiques équivalentes à celles de la biellette 45 et de l'élément d'occultation supplémentaire 47.

### 6.3. Modes de déploiement

On présente en relation avec la figure 6 le déploiement et le repli du store selon l'invention, qui peuvent être motorisés ou manuels.

### 6.3.1. Déploiement et repli motorisés

Le déploiement et le repli de la toile du store selon l'invention peuvent être motorisés soit en commandant la rotation du tube enrouleur, soit en commandant celle des biellettes.

### A/ Motorisation du tube enrouleur

Dans un mode de réalisation de l'invention, le tube enrouleur peut être mis en rotation au moyen d'un moteur. De façon avantageuse, le moteur est inséré à l'intérieur du tube enrouleur. Cette approche permet notamment un gain de place non négligeable.

Chaque biellette 45, 46 est liée à la cassette 42 au moyen d'un axe (non représenté) traversant le trou de perçage 453 de façon que les biellettes 45, 46 peuvent pivoter librement autour d'un axe perpendiculaire à l'axe de la cassette 42.

Chaque extrémité de la barre de tirage 44 est liée à une biellette 45, 46 au moyen d'un doigt coulissant à l'intérieur de la zone de guidage 454 formée dans chacune des biellettes 45, 46.

Un moyen de rappel (non représenté), préférentiellement un ressort spiral, est relié à chacune des biellettes 45, 46 et à la cassette 42. Ces ressorts spirals tendent à déployer chaque biellette 45, 46 hors de la cassette 42 en les faisant tourner autour de leur axe respectif, et donc à éloigner la barre de tirage 44 de la cassette 42.

De façon à déployer le store, le moteur est mis en rotation, par exemple au moyen d'une commande déportée actionnée par un utilisateur. La rotation du moteur génère la rotation du tube enrouleur et donc la libération de la toile d'occultation 43. Sous l'action des ressorts spirals, les biellettes 45, 46 pivotent et se déploient progressivement hors de la cassette 42. La barre de tirage 44 dont les extrémités coulissent le long des zones de guidage 454 prévues au niveau des biellettes 45, 46 tend à maintenir tendue la toile d'occultation 43.

Lorsque la toile d'occultation 43 est totalement déployée, elle occulte la partie centrale de la surface à occulter alors que les éléments occultants supplémentaires 47, 48 solidaires des biellettes 45, 46 occultent les zones latérales de la surface à occulter non occultées par la toile d'occultation 43.

De façon à replier la toile d'occultation 43, le moteur est mis en route en sens inverse du sens permettant le déploiement de la toile d'occultation 43. Le moteur tire alors sur la toile d'occultation 43, contre l'effort des ressorts spirals, de façon rapprocher la barre de tirage 44 de la cassette 42 et à escamoter progressivement les biellettes 45, 46 et les éléments d'occultations supplémentaires 47, 48 à l'intérieur de la cassette 42.

### B/ Motorisation des biellettes

Dans un autre mode de réalisation de la présente invention, chaque biellette 45, 46 est motorisée de façon à pivoter autour de son axe.

Dans ce cas, le tube enrouleur est muni d'un ressort qui tend à maintenir la toile d'occultation 43 enroulée autour du tube enrouleur.

De façon à déployer la toile d'occultation 43, les biellettes 45, 46 sont mises en rotation autour de leur axe respectif au moyen des moteurs. La barre de tirage 44, dont les extrémités coulissent le long des zones de guidage 454 prévues au niveau des biellettes 45, 46 tend à dérouler la toile d'occultation 43 contre l'effort imprimé par le ressort lié au tube d'enroulement.

Lorsque la toile d'occultation 43 est totalement déployée, elle occulte la partie centrale de la surface à occulter alors que les éléments occultants supplémentaires 47, 48 solidaires des biellettes 45 ,46 occultent les zones latérales de la surface à occulter non occultées par la toile d'occultation 43.

De façon à replier la toile d'occultation 43, les moteurs liés aux biellettes 45, 46 sont mis en rotation en sens inverse du sens permettant le déploiement de la toile d'occultation 43, de façon que sous l'effet du pivotement de chacune des biellettes 45, 46, la barre de tirage 44 se rapproche de la cassette 42 et la toile d'occultation 43 se replie progressivement autour du tube enrouleur tout en étant maintenue tendue sous l'action du ressort lié au tube enrouleur.

### 6.3.2. Déploiement et repli manuels

Dans une variante de l'invention, le déploiement et le repli de la toile d'occultation 43 peuvent être opéré de façon manuelle.

Dans ce cas, le tube enrouleur est muni d'un ressort qui tend à maintenir la toile d'occultation 43 enroulée autour du tube enrouleur. Un utilisateur agit directement sur la barre de tirage 44, dans un sens ou dans l'autre selon qu'il souhaite déployer ou replier la toile d'occultation 43. Le déplacement de la barre de tirage 44 entraîne le déploiement des biellettes 45, 46 et de leurs éléments d'occultation supplémentaires 47, 48 hors de la cassette 42. Des moyens d'accrochage de la barre de tirage 44 prévus dans le véhicule permettent de maintenir la toile d'occultation 43 en position déployée.

Lorsque la toile d'occultation 43 est totalement déployée, elle occulte la partie centrale de la surface à occulter alors que les éléments occultants supplémentaires 47, 48 solidaires des biellettes 45, 46 occultent les zones latérales de la surface à occulter non occultées par la toile d'occultation 43.

Au cours de repli de la toile d'occultation 43, celle-ci est maintenue tendue sous l'effet du ressort lié au tube enrouleur.

### 6.4. Variante : association à un cache-bagages

On présente en relation avec les figures 7 à 10 une variante de l'invention dans laquelle le store d'occultation selon l'invention est associé à un store de cache-bagages.

Tel que cela est représenté sur la figure 7, une cassette de store 42 selon l'invention et une cassette de cache-bagages 71 sont solidarisées à proximité l'une de l'autre, par exemple à une plage arrière 72 d'un véhicule de façon que la toile d'occultation 43 du store puisse être déployée (flèche C) sensiblement verticalement derrière la banquette arrière 76, et que la toile de cache-bagages 75 puisse être déployée (flèche D) afin de recouvrir une zone de chargement 77 formée sous une lunette arrière 74.

La figure 8 est une vue dans laquelle la toile d'occultation 43 (prolongée par les éléments d'occultation complémentaires 47 et 48) et la toile 75 de cache-bagages (dépourvue d'éléments d'occultation complémentaires), respectivement munies de leur barre de tirage 44, 81, sont déployées.

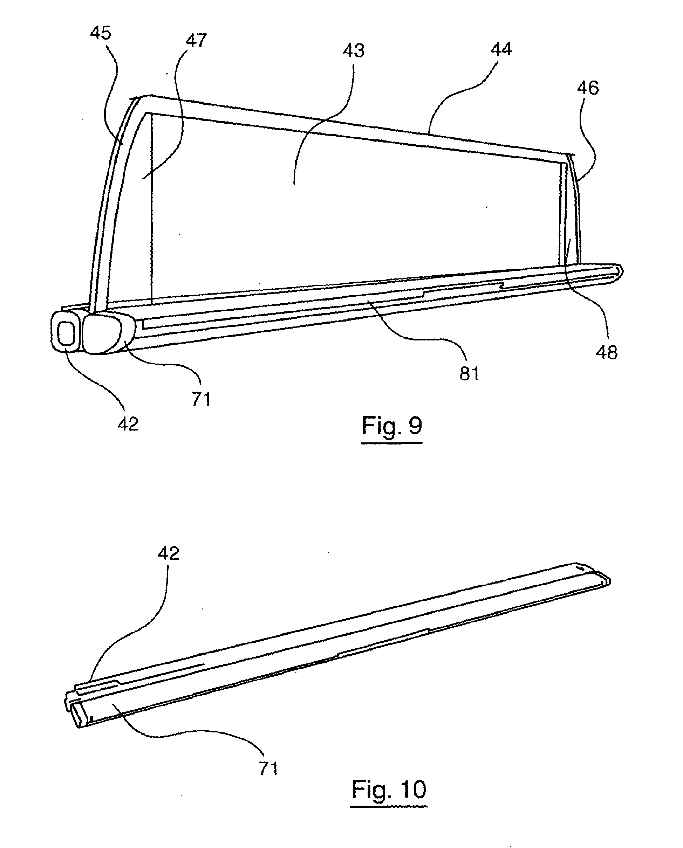

La figure 9 illustre une vue dans laquelle la toile d'occultation 43 est déployée et la toile 75 de cache-bagages est repliée.

La figure 10 illustre une vue dans laquelle la toile d'occultation 43 et la toile 75 de cache-bagages sont repliées.

Dans une variante de ce mode de réalisation, une seule cassette logeant un premier tube enrouleur auquel est liée la toile d'occultation et un second tube enrouleur auquel est liée la toile de cache-bagages peut être mise en oeuvre.

### 6.5. Autres applications du principe de l'invention

Le principe de l'invention peut également être mis en oeuvre dans les cache-bagages de façon à occulter, au moyen d'éléments d'occultation supplémentaires, des zones s'étendant des bords latéraux de la toile aux parois d'un coffre, non occultées par la toile du cache-bagages.

### 6.6. Procédé d'obtention d'un ensemble biellette

la figure 11 illustre un procédé d'obtention d'un ensemble composé d'une biellette et d'un élément d'occultation complémentaire selon l'invention. Un tel procédé comprend 3 étapes.

Une étape 111 permet l'obtention d'une biellette selon l'invention. Il peut par exemple s'agir d'une étape d'usinage ou de rectification d'une pièce métallique ou bien d'injection d'un matériau plastique dans un moule.

Une étape 112 permet d'obtenir un élément d'occultation supplémentaire selon l'invention. Elle peut par exemple comprendre le découpage d'un tel élément d'occultation supplémentaire dans une toile d'occultation.

Une étape 113 permet l'obtention d'une ensemble biellette en solidarisant, par exemple par collage, clippage, agrafage... un élément d'occultation supplémentaire à une biellette.

## Revendications

1. Dispositif d'occultation pour véhicule automobile, comprenant une toile d'occultation (43) montée sur un tube enrouleur de façon à être mobile entre une position repliée et au moins une position déployée, l'extrémité libre de ladite toile d'occultation (43) étant solidaire d'une barre de tirage (44) entraînée par deux biellettes (45, 46),
**caractérisé en ce qu'**au moins une desdites biellettes (45, 46) porte un élément d'occultation latéral (47, 48), destiné à occulter au moins en partie un espace formé entre une surface (41) à occulter et ladite toile d'occultation (43), dans au moins une desdites positions déployées.

2. Dispositif d'occultation selon la revendication 1, **caractérisé en ce que** chaque biellette (45, 46) est liée à une cassette (42) contenant ledit tube enrouleur au moyen d'une liaison pivot, et est logée au moins en partie dans ou le long de ladite cassette (42), dans ladite position repliée.

3. Dispositif selon l'une quelconque des revendications 1 et 2, **caractérisé en ce que** chacune desdites biellettes (45, 46) est liée à ladite barre de tirage (44) au moyen d'une liaison glissière.

4. Dispositif d'occultation selon l'une quelconque des revendications 1 à 3, **caractérisé en ce que** chaque extrémité de ladite barre de tirage (44) présente un doigt destiné à coopérer avec une zone de guidage (454) formée dans chacune desdites biellettes (45, 46).

5. Dispositif d'occultation selon l'une quelconque des revendications 1 à 4, **caractérisé en ce qu'**un moteur logé à l'intérieur dudit tube enrouleur permet le dépliement et le repli de ladite toile d'occultation (43).

6. Dispositif d'occultation selon l'une quelconque des revendications 1 à 5, **caractérisé en ce que** des moyens de rappels agissent sur lesdites biellettes (45, 46) de façon à maintenir ladite toile d'occultation (43) tendue.

7. Dispositif d'occultation selon la revendication 6, **caractérisé en ce que** lesdits moyens de rappel sont des ressorts spirals.

8. Dispositif d'occultation selon l'une quelconque des revendications 1 à 7, **caractérisé en ce que** ledit élément d'occultation latéral (47, 48) est constitué d'une toile tendue sur chacune desdites biellettes (45, 46).

9. Dispositif d'occultation selon l'une quelconque des revendications 1 à 8, **caractérisé en ce qu'**un enjoliveur (51) est rapporté sur chacune desdites biellettes (45,46).

10. Dispositif d'occultation selon l'une quelconque des revendications 1 à 9, **caractérisé en ce que**, dans la ou lesdites positions déployées, il s'étend sensiblement verticalement dans ledit véhicule.

11. Dispositif d'occultation selon l'une quelconque des revendications 1 à 10, **caractérisé en ce qu'**il porte ou est associé à au moins une seconde toile d'occultation (75), destinée à former un store de cache-bagages.

12. Biellette pour dispositif d'occultation selon l'une quelconque des revendications 1 à 11, **caractérisé en ce qu'**elle porte un élément d'occultation latéral (47, 48), destiné à occulter au moins en partie un espace formé entre une surface (41) à occulter et une toile d'occultation (43), dans au moins une position déployée dudit dispositif d'occultation.

13. Véhicule automobile, **caractérisé en ce qu'**il comprend au moins un dispositif d'occultation selon l'une quelconque des revendications 1 à 11, comprenant une toile d'occultation (43) montée sur un tube enrouleur de façon à être mobile entre une position repliée et au moins une position déployée, l'extrémité libre de ladite toile d'occultation (43) étant solidaire d'une barre de tirage (44) entraînée par deux biellettes (45, 46),
au moins une desdites biellettes (45, 46) portant un élément d'occultation latéral (47, 48), destiné à occulter au moins en partie un espace formé entre une surface (41) à occulter et ladite toile d'occultation (43), dans au moins une desdites positions déployées.

## Claims

1. A concealing device for an automobile, comprising a blind (43) mounted on a roller tube so as to be mobile between a folded-up position and at least one deployed position, the free end of said blind (43) being integral with a pull bar (44) driven by two track rods (45, 46),
**characterized in that** at least one of said track rods (45, 46) carries a lateral concealing element (47, 48) intended to conceal at least in part a space formed between a surface (41) to be concealed and said blind (43), in at least one of said deployed positions.

2. The concealing device according to claim 1, **characterized in that** each track rod (45, 46) is connected to a housing (42) containing said roller tube by means of a pivot and is housed at least in part in or along said housing (42), in said folded position.

3. The device according to any one of claims 1 and 2, **characterized in that** each of said track rods (45, 46) is connected to said pull bar (44) by means of a slide.

4. The concealing device according to any one of claims 1 to 3, **characterized in that** each end of said pull bar (44) presents a finger intended to cooperate with a guiding zone (454) formed in each of said track rods (45, 46).

5. The concealing device according to any one of claims 1 to 4, **characterized in that** a motor housed inside said roller tube allows the blind (43) to be deployed and folded-up.

6. The concealing device according to any one of claims 1 to 5, **characterized in that** the return means act on said track rods (45, 46) so as to maintain said blind (43) tight.

7. The concealing device according to claim 6, **characterized in that** said return means are spiral springs.

8. The concealing device according to any one of claims 1 to 7, **characterized in that** said lateral concealing element (47, 48) is constituted of a blind tight over each of said track rods (45, 46).

9. The concealing device according to any one of claims 1 to 8, **characterized in that** a rim (51) is mounted on each of said track rods (45, 46).

10. The concealing device according to any one of claims 1 to 9, **characterized in that**, in said deployed position or positions, the device extends substantially vertically in said vehicle.

11. The concealing device according to any one of claims 1 to 10, **characterized in that** the device carries or is combined with at least one second blind (75) intended to form a luggage concealing blind.

12. A track rod for a concealing device according to any one of claims 1 to 11, **characterized in that** the track rod carries a lateral concealing element (47, 48) intended to conceal at least in part a space formed between a surface (41) to be concealed and a blind (43), in at least one deployed position of said concealing device.

13. An automobile, **characterized in that** the automobile comprises at least one concealing device according to any one of claims 1 to 11, comprising a blind (43) mounted on a roller tube so as to be mobile between a folded-up position and at least one deployed position, the free end of said blind (43) being integral with a pull bar (44) driven by two track rods (45, 46),
at least one of said track rods (45, 46) carries a lateral concealing element (47, 48) intended to conceal at least in part a space formed between a surface (41) to be concealed and said blind (43), in at least one of said deployed positions.

## Patentansprüche

1. Abdeckungsvorrichtung für Kraftfahrzeug, die ein Abdeckungstuch (43) aufweist, das derart auf eine Wickelwelle montiert ist, dass es zwischen einer eingezogenen und mindestens einer ausgezogenen Position beweglich ist, wobei das freie Ende des Abdeckungstuchs (43) fest mit einer Zugstange (44), die von zwei Schwingarmen (45, 46) angetrieben ist, verbunden ist,
**dadurch gekennzeichnet, dass** mindestens einer der Schwingarme (45, 46) ein seitliches Abdeckungselement (47, 48) aufweist, das dazu bestimmt ist, einen Raum, der zwischen einer abzudeckenden Fläche (41) und dem Abdeckungstuch (43) gebildet ist, in mindestens einer der ausgezogenen Positionen abzudecken.

2. Abdeckungsvorrichtung nach Anspruch 1, **dadurch gekennzeichnet, dass** jeder Schwingarm (45, 46) mit einer Kassette (42), die die Wickelwelle enthält, mittels einer Zapfenverbindung verbunden und mindestens zum Teil in oder entlang der Kassette (42) in der eingezogenen Position untergebracht ist.

3. Vorrichtung nach einem der Ansprüche 1 und 2, **dadurch gekennzeichnet, dass** jeder der Schwingarme (45, 46) mit der Zugstange (44) mittels einer Verbindungsgleitführung verbunden ist.

4. Abdeckungsvorrichtung nach einem der Ansprüche 1 bis 3, **dadurch gekennzeichnet, dass** jedes Ende der Zugstange (44) einen Finger aufweist, der dazu bestimmt ist, mit einer Führungszone (454) zusammenzuwirken, die in jedem der Schwingarme (45, 46) ausgebildet ist.

5. Abdeckungsvorrichtung nach einem der Ansprüche 1 bis 4, **dadurch gekennzeichnet, dass** ein Motor, der im Inneren der Wickelwelle untergebracht ist, das Einziehen und das Ausziehen des Abdeckungstuchs (43) erlaubt.

6. Abdeckungsvorrichtung nach einem der Ansprüche 1 bis 5, **dadurch gekennzeichnet, dass** Rückholmittel auf die Schwingarme (45, 46) derart einwirken, dass das Abdeckungstuch (43) gespannt bleibt.

7. Abdeckungsvorrichtung nach Anspruch 6, **dadurch gekennzeichnet, dass** die Rückholmittel Spiralfedern sind.

8. Abdeckungsvorrichtung nach einem der Ansprüche 1 bis 7, **dadurch gekennzeichnet, dass** das seitliche Abdeckungselement (47, 48) aus einem Tuch besteht, das auf jedem der Schwingarme (45, 46) gespannt ist.

9. Abdeckungsvorrichtung nach einem der Ansprüche 1 bis 8, **dadurch gekennzeichnet, dass** eine Zierleiste (51) an jeden der Schwingarme (45, 46) angebaut ist.

10. Abdeckungsvorrichtung nach einem der Ansprüche 1 bis 9, **dadurch gekennzeichnet, dass** sie sich in der oder den ausgezogenen Positionen im Wesentlichen vertikal in dem Fahrzeug erstreckt.

11. Abdeckungsvorrichtung nach einem der Ansprüche 1 bis 10, **dadurch gekennzeichnet, dass** sie mindestens ein zweites Abdeckungstuch (75), das eine Gepäcksabdeckung bilden soll, trägt oder damit verbunden ist.

12. Schwingarm für Abdeckungsvorrichtung nach einem der Ansprüche 1 bis 11, **dadurch gekennzeichnet, dass** er ein seitliches Abdeckungselement (47, 48) trägt, das dazu bestimmt ist, einen Raum, der zwischen einer abzudeckenden Oberfläche (41) und einem Abdeckungstuch (43) gebildet ist, in mindestens einer ausgezogenen Position der Abdeckungsvorrichtung zumindest zum Teil abzudecken.

13. Kraftfahrzeug, **dadurch gekennzeichnet, dass** es mindestens eine Abdeckungsvorrichtung nach einem der Ansprüche 1 bis 11 aufweist, die ein Abdeckungstuch (43) aufweist, das derart auf eine Wickelwelle montiert ist, dass es zwischen einer eingezogenen und mindestens einer ausgezogenen Position beweglich ist, wobei das freie Ende des Abdeckungstuchs (43) fest mit einer Zugstange (44) verbunden ist, die von zwei Schwingarmen (45, 46) angetrieben ist,
wobei mindestens einer der Schwingarme (45, 46) ein seitliches Abdeckungselement (47, 48) trägt, das dazu bestimmt ist, einen Raum, der zwischen einer abzudeckenden Fläche (41) und dem Abdeckungstuch (43) ausgebildet ist, in mindestens einer der ausgezogenen Positionen zumindest teilweise abzudecken.
